# EUROPÄISCHE PATENTSCHRIFT

(11) **EP 0 842 300 B1**
(45) Veröffentlichungstag und Bekanntmachung des Hinweises auf die Patenterteilung: **07.11.2001**
(21) Anmeldenummer: 96927582.5
(22) Anmeldetag: 23.07.1996
(51) Int. Cl.: C14C 9/00

(54) **VERWENDUNG VON POLYASPARAGINSÄUREAMIDEN ALS LEDERHILFSMITTEL**
USE OF POLYASPARTIC ACID AMIDES AS LEATHER AUXILIARY PRODUCTS
UTILISATION D'AMIDES D'ACIDE POLYASPARTIQUE COMME PRODUITS AUXILIAIRES POUR LE CUIR

(30) Priorität: 04.08.1995 DE 19528782
(43) Veröffentlichungstag der Anmeldung: 20.05.1998
(73) Patentinhaber: BAYER AG, 51368 Leverkusen (DE)
(72) Erfinder: REINERS, Jürgen, D-51373 Leverkusen (DE); SCHNEE, Manfred, D-51381 Leverkusen (DE); GROTH, Torsten, D-51519 Odenthal (DE); JOENTGEN, Winfried, D-51067 Köln (DE); SCHMITZ, Gerd, D-51371 Leverkusen (DE); TRÄUBEL, Harro, D-51373 Leverkusen (DE); MÜLLER, Nikolaus, D-40789 Monheim (DE)
(86) Internationale Anmeldenummer: EP9603241
(87) Internationale Veröffentlichungsnummer: WO9706279

(56) Entgegenhaltungen:
- DE-A- 3 909 614
- DE-A- 4 310 995

## Beschreibung

Die Erfindung betrifft die Verwendung von Produkten, die durch Umsetzung von Polysuccinimid mit Amin erhalten werden können, als Lederhilfsmittel. Die Verwendung dieser Hilfsmittel führt zu begehrenswerten Eigenschaften wie hohe Fülle, weichen Griff und ausgezeichnete Narbenglätte und Festnarbigkeit.

Leder mit geringer Fülle sind dünn und hart und besitzen eine geringe Flexibilität. Mit Hilfe von Lederhilfsmitteln versucht man vor, während und/oder nach der Gerbung die gewünschten Eigenschaften zu erzielen. Dabei ist zu beachten, daß die Leder trotz ihrer Weichheit auch eine ausreichende mechanische Festigkeit besitzen sollten. Darüber hinaus darf die Lederoberfläche nicht kleben; sie soll einen angenehmen Griff aufweisen. Manche Hilfsmittel ergeben Leder, die zu Losnarbigkeit neigen; auch diese unerwünschte Begleiterscheinung soll vermieden werden.

Überraschenderweise wurde nun gefunden, daß Polyasparaginsäureamide auf Leder die oben geschilderte ausgezeichnete Wirkung ausüben.

Gegenstand der Erfindung ist also die Verwendung von Produkten mit einem als Zahlenmittel bestimmten Molekulargewicht von 700 bis 30 000, vorzugsweise 1 300 bis 16 000, erhältlich durch Umsetzung von
A. Polysuccinimid mit einem als Zahlenmittel bestimmten Molekulargewicht von 500 bis 10 000, vorzugsweise 500 bis 6 000, insbesondere 1 000 bis 4 000, mit
B. 5 bis 90, vorzugsweise 20 bis 80 Mol-%, bezogen auf Succinimideinheiten des Polysuccinimids A, primärem und/oder sekundärem Amin, dessen Stickstoffsubstituenten 1 bis 60, vorzugsweise 1 bis 36 Kohlenstoffatome enthalten, durch Fluoratome, Hydroxyl-, Aminogruppen und/oder Siliciumorganische Reste substituiert und/oder durch Sauerstoffatome, Ester-, Amid-, Harnstoff-, Urethangruppen unterbrochen sein können, wobei mindestens 2,5, vorzugsweise mindestens 15, insbesondere mindestens 30 Mol-% der Stickstoffsubstituenten des Amins mindestens 12 Kohlenstoffatome enthalten, gegebenenfalls
C. (i) Derivaten von C₁-C₁₈-Monocarbonsäuren und/oder C₂-C₁₀-Dicarbonsäuren und/oder (ii) Monoisocyanaten, Diisocyanaten oder Epichlorhydrin (zur Umsetzung von Amino- und/oder Hydroxylgruppen an den Stickstoffsubstituenten des Umsetzungsprodukts aus A und B), und (obligatorisch)
D. 95 bis 10, vorzugsweise 80 bis 20 Mol-% ringöffnende Base in Gegenwart von Wasser,
als Lederhilfsmittel.

Das als Ausgangsprodukt für die erfindungsgemäß zu verwendenden Polyasparaginsäureamide dienende Polysuccinimid A ist bekannt. So kann die Herstellung aus Asparaginssäure unter Wasserabspaltung erfolgen; vgl. z.B. J. Org. Chem. 26 (1961) 1084; FR 70 24 831; P. Neri in J. Med. Chem. 16 (1973), 893; US-PS 4 363 797.

Andere Verfahren gehen von Maleinsäure oder ihrem Anhydrid und Ammoniak aus (DE-OS 4 305 368; US-PS 4 839 461). So kann Polysuccinimid beispielsweise durch Umsetzung von 80 bis 100 Mol-% Maleinsäure und 20 bis 0 Mol-% Bernsteinsäureanhydrid (als Kettenabbrecher) mit Ammoniak unter Entfernung des Reaktionswassers bei erhöhter Temperatur, im allgemeinen bei 85 bis 240, vorzugsweise 120 bis 180°C hergestellt werden.

Die US-PS 4 839 461 (= EP-A 256 366) beschreibt die Herstellung aus Maleinsäureanhydrid, Wasser und Ammoniak. Danach wird Maleinsäureanhydrid in wäßrigem Medium unter Zugabe von konzentrierter Ammoniak-Lösung in das Monoammoniumsalz umgewandelt. Dieses Maleinsäuremonoammoniumsalz kann vorzugsweise bei 150 bis 180°C in einem Reaktor bei einer Verweilzeit von 5 bis 300 Minuten einer thermischen, gegebenenfalls kontinuierlichen Polykondensation zu Polysuccinimid unterworfen werden.

Man kann das als Ausgangsverbindung dienende Polysuccinimid A auch durch Dehydratisierung von Polyasparaginsäure herstellen.

Die Herstellung von Polyasparaginsäure und ihrer Derivate ist seit langem Gegenstand zahlreicher Veröffentlichungen. So kann die Herstellung durch thermische Polykondensation von Asparaginsäure erfolgen (J. Org. Chem. 26, 1084 (1961)); vgl. auch DE-OS 2 253 190, US-PS 4 696 981, 5 296 578 und 5 288 783.

Polyasparaginsäure enthält in einer bevorzugten Ausführungsform im wesentlichen wiederkehrende Einheiten folgender Strukturen

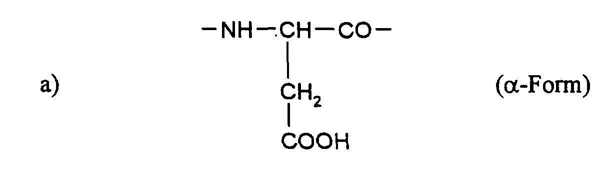

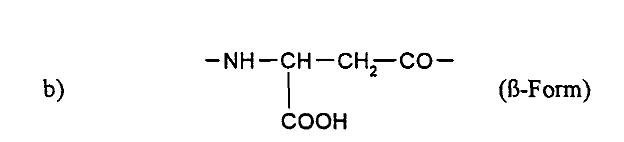

Im allgemeinen liegt der Anteil der β-Form bei mehr als 50 %, insbesondere mehr als 70 %, bezogen auf die Summe a + b.

Zusätzlich zu den wiederkehrenden Asparaginsäureeinheiten a) und b) können weitere wiederkehrende Einheiten enthalten sein, z.B.
c) Äpfelsäureeinheiten der Formel 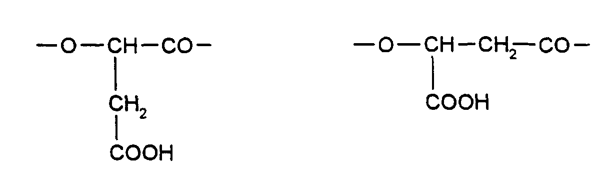
d) Maleinsäureeinheiten der Formel 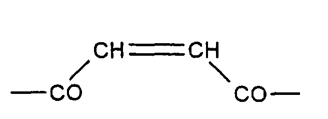
e) Fumarsäureeinheiten der Formel

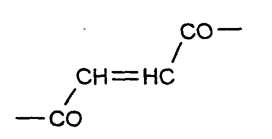

Die "weiteren" wiederkehrenden Einheiten können in Mengen bis zu 100 Gew.-%, bezogen auf die Summe a + b, in der Polyasparaginsäure enthalten sein.

Bevorzugte Polyasparaginsäuren besitzen als Gewichtsmittel durch Gelpermeationschromatographie (geeicht mit Polystyrol) bestimmte Molekulargewichte von 500 bis 10.000, vorzugsweise 1.000 bis 5.000, insbesondere 2.000 bis 4.000.

Die Dehydratisierung von Polyasparaginsäure zu Polysuccinimid kann bei erhöhter Temperatur, vorzugsweise bei 100 bis 240°C, gegebenenfalls in Gegenwart eines Katalysators, z.B. in Gegenwart von 0,01 bis 1 Gew.-%, bezogen auf Polyasparaginsäure, eines sauren Katalysators wie Schwefelsäure, Phosphorsäure, Methansulfonsäure, erfolgen.

Bevorzugte Amine B umfassen sekundäre und - vorzugsweise - primäre Amine, wie z.B. monofunktionelle Polyetheramine mit einer primären oder sekundären Aminogruppe wie α-Methyl-ω-amino-polyoxyethylen, α-Methyl-ω-aminopropyltriethoxysilan, Aminopropyl-trimethoxy-silan, Aminopropyl-heptamethyl-trisiloxan, N-2-Aminoethyl-aminopropyl-dimethyl-ethoxy-silan, N-2-Aminoethyl-amino-propyl-methyl-dimethoxy-silan, Perfluorhexyl-ethylamin, N-Aminoethyl-N-methylperfluoroctylsulfonamid, N,N-Dimethylethylendiamin, Methylamin, Diethylamin, Butylamin, Stearylamin, Talgfettamin, Oleylamin, Undecylamin, Dodecylamin, Octylamin, Hexylamin, Eicosanylamin, Hexadecylamin, 2-Ethyl-hexylamin, Morpholin, Ethanolamin, Diethanolamin, Bis-2-hydroxy-propylamin, Bis-3-hydroxy-propylamin, 2- oder 3-Hydroxypropylamin, Ethoxy-ethylamin, Ethoxy-ethoxy-ethylamin, Butoxy-ethoxy-ethoxy-ethylamin, 2-Methoxy-ethyl-amin, Tetrahydrofurfurylamin, 5-Aminopentanol, Benzylamin, 4-Aminocyclohexylamin, Taurin-Na-Salz, Glycinmethylester, N-Methylaminoethyl-sulfonsäure-Na-Salz, Dehydroabietylamin, Stearoyloxypropylamin,

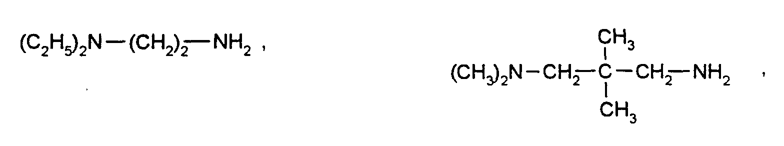

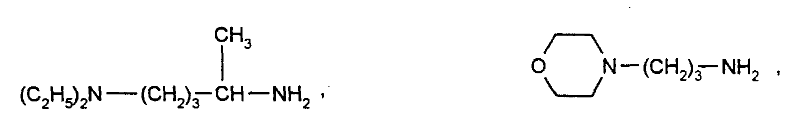

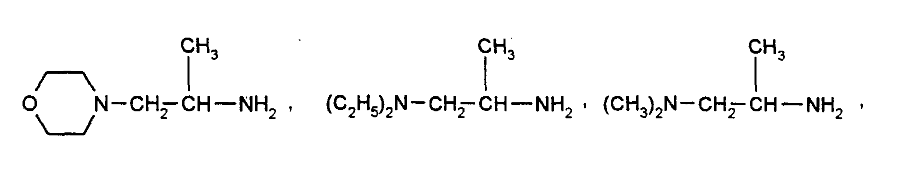

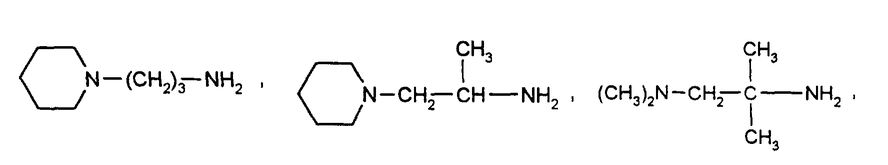

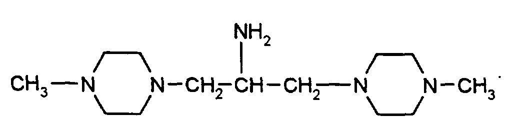

Die Umsetzung von Polysuccinimid mit Aminen ist im Prinzip bekannt; vgl. z.B. DE-OS 2 253 190, EP-A 274 127, 406 623 und 519 119, US-PS 3 846 380, 3 927 204 und 4 363 797; P. Neri et al., Macromol. Syntheses 8, 25. Die Umsetzung kann zwar in überschüssigem Amin B ausgeführt werden, wird aber vorzugsweise in organischen Lösungsmitteln durchgeführt, die unter Reaktionsbedingungen inert sind. Als solche eignen sich beispielsweise Lactame wie Caprolactam, N-Methylpyrrolidon, N-Methylcaprolactam, Polyalkylendiole und deren Mono- und Diether, wie Ethylenglykol, Diethylenglykol, Triethylenglykol, Ethylenglykoldimethyl- und -diethylether und Diethylenglykolmonoethylether, sowie Dimethylformamid und Dimethylsulfoxid. Der Lösungsmittelgehalt wird in der Regel 30 Gew.-%, bezogen auf die gesamte Reaktionsmischung, nicht überschreiten.

Das Reaktionsgemisch kann, wenn auch nicht bevorzugt, Wasser oder Paraffine enthalten. Die Reaktion wird in einem Temperaturbereich von 20 bis 160°C durchgeführt, wobei die Reaktionszeiten zwischen 2 bis 72 Stunden liegen. Das Produkt kann durch destillatives Entfernen des Lösungsmittels oder durch Ausfällen des Produktes in einem Nichtlösemittel wie Aceton, Methanol, Ethanol, Wasser, Isopropanol isoliert und danach, falls gewünscht, getrocknet werden.

Aus dem Umsetzungsprodukt aus A und B lassen sich die erfindungsgemäß zu verwendenden Polyasparaginsäureamide durch Öffnung der verbliebenen eingebauten Succinimidringe herstellen. Als ringöffnende Basen D kommen sowohl Alkalihydroxide, -carbonate und -hydrogencarbonate, insbesondere Natrium- und Kaliumhydroxid und Natriumcarbonat, als auch Ammoniak und Amine-einschließlich der Amine B - in Frage.

Nach einer besonderen Ausführungsform kann man Maleinsäure bzw. Maleinsäureanhydrid und wäßrigen Ammoniak im Molverhältnis 1:0,75 bis 1:1,5 mischen und Wasser abdestillieren. Wenn das Polysuccinimid, gegebenenfalls unter Mitverwendung eines organischen Lösemittels wie Diethylenglykol, Pyrrolidon, N-Methylpyrrolidon das gewünschte Molekulargewicht erreicht hat, wird Amin B zudosiert und bei 130 bis 160°C umgesetzt. Eine Reaktionszeit von 3 bis 18, vorzugsweise von 4 bis 8 Stunden ist in der Regel für die Umsetzung mit dem Amin B ausreichend. Gegebenenfalls kann ein organisches Lösungsmittel zugesetzt werden. Es entsteht direkt das erfindungsgemäß zu verwendende Polyasparaginsäureamid, das sich unter gleichzeitiger Öffnung der verbliebenen eingebauten Succinimidringe mit ringöffnender Base D leicht in Wasser dispergieren läßt, wobei die Mitverwendung von üblichen Dispergiermitteln vorteilhaft ist.

Die erfindungsgemäß zu verwendenden Polyasparaginsäureamide enthalten in einer idealisierten Form wiederkehrende Struktureinheiten der Formeln 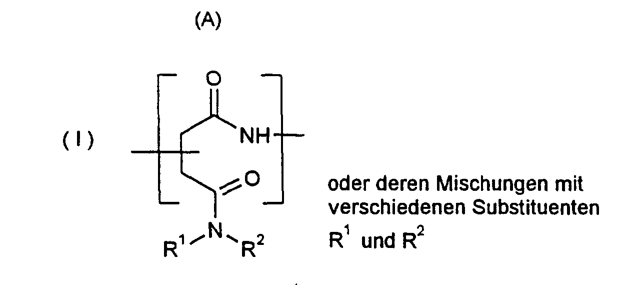 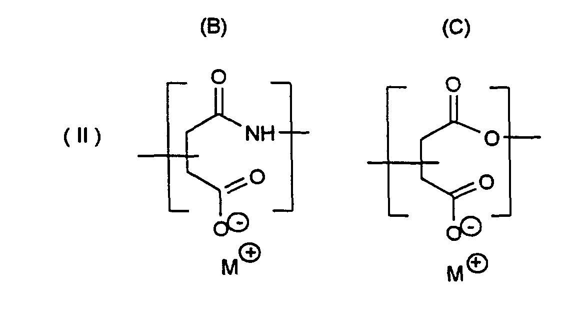 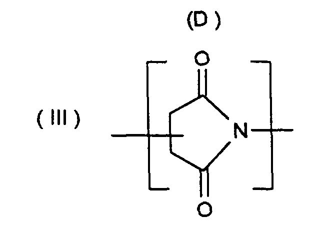 worin
- R¹, R²: Wasserstoff oder einen der oben als Stickstoffsubstituenten bezeichneten Reste bedeuten mit der Maßgabe, daß mindestens einer der beiden Reste ungleich Wasserstoff ist, und
- M⁺: für H⁺ oder ein Alkaliion, ein NH₄-ion oder einen primären, sekundären oder tertiären aliphatischen Ammoniumrest, der vorzugsweise mindestens eine C₁-C₂₂-Alkyl- oder -Hydroxyalkylgruppe trägt, steht.

Geeignete Reste M⁺ sind beispielsweise Hydroxyethylammonium, Dihydroxyethylammonium, Trishydroxyethylammonium, Triethylammonium, Ammonium, Butylammonium, Benzyltrimethylammonium, Morpholinium, Stearylammonium, Oleylammonium.

Die Struktureinheiten I sind im Polymer vorzugsweise in einer Menge von 5 bis 90, insbesondere 20 bis 80 Mol-%, bezogen auf sämtliche wiederkehrende Einheiten, enthalten. Bevorzugte Polyasparaginsäureamide enthalten durchschnittlich pro Struktureinheit I mindestens einen C₁₂-C₂₂-Alkyl- und/oder -Alkylenrest.

Die Struktureinheiten II sind im Polymer vorzugsweise in einer Menge von 95 bis 10, insbesondere 80 bis 20 Mol-%, bezogen auf sämtliche wiederkehrende Einheiten, enthalten. Besonders bevorzugt sind Polyasparaginsäureamide, deren Carboxylgruppen in teilneutralisierter Form vorliegen. Der bevorzugte Neutralisationsgrad beträgt 10 bis 70, vorzugsweise 20 bis 50 %. Dabei entfallen auf die Struktur IIC 0 bis 20 Mol-%, bezogen auf die Strukturen II.

Die Struktureinheiten III sind im Polymer in einer Menge von 0 bis 5 Mol-%, bezogen auf sämtliche wiederkehrende Einheiten, enthalten. Bevorzugte Polyasparaginsäureamide enthalten weniger als 1 Mol-% der Struktureinheiten III.

Für den Fall, daß Polysuccinimid A aus Polyasparaginsäure hergestellt worden ist, die die oben erwähnten wiederkehrenden Einheiten C) enthält, können auch die Carboxylgruppen dieser wiederkehrenden Einheiten amidiert sein.

Geeignete Stickstoffsubstituenten R¹, R² umfassen unabhängig voneinander beispielsweise gegebenenfalls Hydroxyl-substituierte C₁-C₂₂-Alkyl- oder C₂-C₂₂-Alkenylgruppen von Hydroxyethyl, Hydroxypropyl, Methyl, Ethyl, Butyl, Hexyl, Octyl, Octenyl, Decyl, Undecyl, Undecenyl, Dodecyl, Tetradecyl, Hexadecyl, Oleyl, Octadecyl, 12-Hydroxy-octadecenyl, C₅-C₁₀-Cycloalkylreste wie Cyclohexyl, durch Sauerstoffatome, Ester-, Amid-, Urethangruppen unterbrochene C₁₂-C₃₀-Reste wie Stearoyloxyethyl, Stearyloxyethoxyethyl und Stearylcarbamoyloxyethyl sowie Reste der Formeln 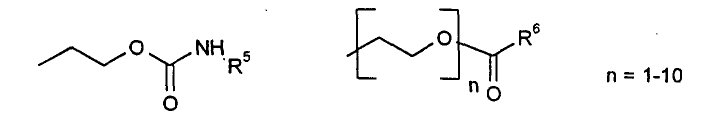 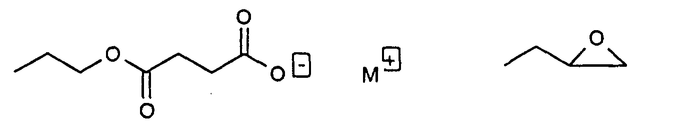 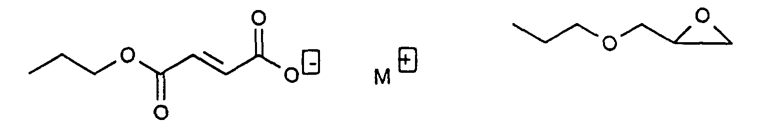 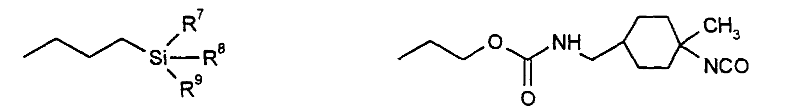 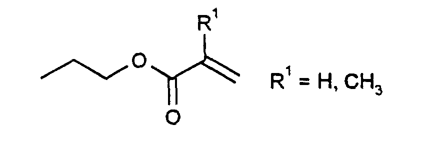 worin
- R⁵, R⁶: C₁-C₃₀-Alkyl, C₂-C₃₀-Alkenyl, C₅-C₁₀-Cycloalkenyl,
- R⁷ bis R⁹: C₁-C₄-Alkyl oder -Alkoxy bedeuten und
- M⁺: die oben angegebene Bedeutung hat.

Stickstoffsubstituenten, die durch Sauerstoffatome, Ester-, Amid- oder Urethangruppen unterbrochen sind, können grundsätzlich entweder durch Verwendung diese Gruppen bereits enthaltender Amine B oder nachträüglich durch Umsetzung zunächst eingeführter reaktiver Stickstoffsubstituenten mit geeigneten Reaktionspartnern entstehen.

Amid- und Estergruppen können beispielsweise durch nachträgliche Umsetzung bereits eingeführter Aminoalkyl- bzw. Hydroxyalkylreste durch Umsetzung mit reaktiven Carbonsäurederivaten, vorzugsweise von Derivaten von C₁-C₁₈-Monocarbonsäuren oder C₂-C₁₀-Dicarbonsäuren, wie Anhydriden oder Chloriden, z.B. Acetanhydrid, Acetylchlorid, Acryl- und Methacrylsäurechlorid, Methacrylsäureanhydrid, Bernsteinsäureanhydrid, Maleinsäureanhydrid, Stearinsäurechlorid, Phthalsäureanhydrid, eingeführt werden.

Urethangruppen und Harnstoffgruppen können beispielsweise durch nachträgliche Umsetzung bereits eingeführter Amino- oder Hydroxyalkylreste mit Mono- oder Diisocyanaten wie Butylisocyanat, Stearylisocyanat, Toluylendiisocyanat, Isophorondiisocyanat, 1-Isocyanatomethyl-4-methyl-4-cyclohexylisocyanat eingeführt werden. Besonders bevorzugt sind Monoisocyanate. Vernetzte Produkte werden nicht bevorzugt.

Durch Sauerstoffatome unterbrochene Stickstoffsubstituenten werden am besten durch Verwendung entsprechender Aminoether B eingeführt.

Epoxygruppen können beispielsweise durch nachträgliche Epoxidierung bereits eingeführter Alkenylgruppen, z.B. mit Persäuren, eingeführt werden. Eine andere Möglichkeit ist die Alkylierung mit Epichlorhydrin.

Die erfindungsgemäß zu verwendenden Polyasparaginsäureamide sind sehr oft selbstdispergierend, besonders wenn der Anteil der Struktureinheiten I unter 50 Mol-% liegt. Es können aber auch externe Dispergatoren verwendet werden; als solche kommen prinzipiell kationische, anionische und nichtionische Dispergatoren in Frage, wie sie z.B. in "Methoden der organischen Chemie" (Houben-Weyl), 4. Auflage, Band XIV/1, Georg Thieme Verlag, Stuttgart 1961, S. 190 f. beschrieben sind.

Bevorzugte Dispergatoren umfassen beispielsweise C₈-C₁₈-n-Alkylsulfate, C₈-C₁₈-n-Alkyl-benzolsulfonate, C₈-C₁₈-n-Alkyl-trimethyl-ammoniumsalze, n-Di-C₈-C₁₈-alkyl-dimethyl-ammoniumsalze, C₈-C₁₈-n-Alkyl-carboxylate, C₈-C₁₈-n-Alkyl-dimethylaminoxide, C₈-C₁₈-n-Alkyl-dimethylphosphinoxide und - vorzugsweise-Oligoethylenglykol-mono-C₆-C₁₈-alkylether mit durchschnittlich 2 bis 30 Ethoxygruppen pro Molekül. Die n-Alkylreste können auch durch teilweise ungesättigte lineare aliphatische Reste ersetzt sein. Besonders bevorzugte Dispergatoren sind Oligoethylenglykolmono-C₁₀-C₁₄-alkylether mit durchschnittlich 4 bis 12 Ethoxygruppen pro Molekül, insbesondere Oligoethylenglykol-mono-C₁₂-alkylether mit durchschnittlich 8 Ethoxygruppen pro Molekül.

Bevorzugte Dispergatoren umfassen weiterhin Ölsäure, Ölsäuresarcoside, Ricinolsäure, Stearinsäure, Fettsäurepartialester von Polyolen wie Glycerin, Trimethylolpropan oder Pentaerythrit und deren Acylierungs-, Ethoxylierungs- und Propoxylierungsprodukte, z.B. Glycerinmonostearat und -monooleat, Sorbitanmonostearat und -monooleat, Sorbitantristearat und -trioleat und deren Umsetzungsprodukte mit Dicarbonsäureanhydriden wie Bernsteinsäureanhydrid, Maleinsäureanhydrid, Phthalsäureanhydrid oder Tetrahydrophthalsäureanhydrid, Umsetzungsprodukte aus Bis-(hydroxymethyl)-tricyclodecan und Maleinsäureanhydrid oder Bernsteinsäureanhydrid und deren Derivate, vorzugsweise in Form ihrer Alkali- oder Ammoniumsalze.

Besonders bevorzugte Dispergatoren sind Salze aus langkettigen Fettsäuren, vorzugsweise Ölsäure und einem Aminoalkohol, vorzugsweise Hydroxyethylamin, Bishydroxyethylamin oder Trishydroxyethylamin.

Die Bildung der Dispersion der erfindungsgemäß zu verwendenden Polyasparaginsäureamide kann so geschehen, daß man die Polyasparaginsäureamide in einer wäßrigen Dispergatorlösung, vorzugsweise unter Erwärmen auf Temperaturen von 40 bis 95°C, unter Rühren dispergiert.

Im allgemeinen ist zu empfehlen, die erfindungsgemäß zu verwendenden Polyasparaginsäureamide ohne Zwischenisolierung direkt aus dem Reaktionsgemisch heraus, das gegebenenfalls organisches Lösungsmittel enthält, zu dispergieren. So kann man beispielsweise eine wäßrige Dispergatorlösung zum Reaktionsgemisch unter Rühren bei Temperaturen von 70 bis 130°C zudosieren, so daß sich eine Mischtemperatur von 70 bis 95°C einstellt, und das organische Lösungsmittel abdestillieren. Umgekehrt kann man natürlich auch das Reaktionsgemisch in wäßrige Dispergatorlösung oder eine Mischung von Reaktionsgemisch und Dispergator in Wasser dispergieren. Man kann auch auf die Entfernung des Lösungsmittels verzichten; in diesem Fall sollte aber der Lösungsmittelgehalt der Dispersion 10 Gew.-% nicht überschreiten.

Der Dispergatorgehalt beträgt im allgemeinen nicht mehr als 30, vorzugsweise 3 bis 15 Gew.-%, bezogen auf fertige Dispersion.

Der Festgehalt der Dispersionen kann 5 bis 70 Gew.-% betragen. Die mittlere Teilchengröße der dispergierten Polyasparaginsäureamide beträgt im allgemeinen 100 bis 1000, vorzugsweise 100 bis 700 und insbesondere 100 bis 400 nm.

Um das Eindringen der Hilfsmittel in das Leder zu erleichtern, kann es wünschenswert sein, die Teilchengröße der dispersen Phase zu verringern. Dazu kann die bereits erhaltene Voremulsion unter hohem Schergefälle in bekannten Dispergiermaschinen wie in einem Strahldispergator oder Mischern mit Rotor-Stator-Prinzip nachbehandelt werden. Die Dispergierdauer kann zwischen wenigen Minuten bis zu 4 Stunden betragen. Die Dispergierung wird vorzugsweise in einem Temperaturbereich zwischen 20 und 75°C duchgeführt.

Die Dispersionen können insbesondere bei Feststoffgehalten oberhalb von 40 Gew.-% in Form von Pasten vorliegen, die sich aber mit Wasser gut verdünnen lassen. Die Dispersionen mit einem Feststoffgehalt unterhalb von 40 Gew.-% liegen in Form von dünnflüssigen Emulsionen vor. Der pH-Wert der Emulsionen bzw. Pasten liegt zwischen 4,5 und 12, vorzugsweise im pH-Bereich zwischen 4,5 und 10.

Die Lederbehandlung kann mit einer wäßrigen Flotte, die die erfindungsgemäß zu verwendenden Polyasparaginsäureanhydride enthält, erfolgen.

Dazu wird das Leder mit der Flotte durch Auftrag mittels Walzen oder in einem Behälter, vorzugsweise in einem Gerbfaß, in Kontakt gebracht. Nach der Behandlung wird das Leder getrocknet.

Die einzelnen Verfahrensschritte sollen am Beispiel von wet blue (chromgegerbten Häuten) verdeutlicht werden:
1. Neutralisieren des chromgegerbten Leders
2. Waschen
3. Zugabe der Flotte, enthaltend die erfindungsgemäß zu verwendenden Polyasparaginsäureamide
4. Verminderung des pH-Wertes durch Zugabe einer Carbonsäure auf pH-Werte <4,5, vorzugsweise auf 3,0 bis 4,5
5. Waschen
6. Trocknen.

In einer besonderen Ausführungsform kann man auch Leder nachträglich mit einer Dispersion behandeln, die die erfindungsgemäß zu verwendenden Polyasparaginsäureamide enthält.

In der Flotte, die das erfindungsgemäß zu verwendende Mittel enthält, oder getrennt davon können andere Hilfsmittel mitverwendet werden. Dazu gehören:
polymere Nachgerbstoffe auf Basis von bekannten Polyacrylat-Dispersionen, Lederfarbstoffe, Vegetabilgerbstoffe, Syntane, Fettungsmittel, Neutralöle, Hydrophobiermittel. Es können nur solche Kombinationen angewendet werden, die mit den Dispersionen der erfindungsgemäßen Polyasparaginsäure kompatibel sind. Die Anwendung von Zusätzen mit einer anionischen Ladung ist in der Regel unproblematisch bei einem Flotten-pH von 6 bis 4,5. Diese Zusätze können besonders vorteilhaft aber auch vor oder nach der Anwendung der erfindungsgemäß zu verwendenden Polyasparaginsäsureamide eingesetzt werden.

Geeignete Fettungsmittel sind beispielsweise:
- oxidierte und/oder sulfoxidierte, vorzugsweise halogenfreie C₁₆₋₃₀-Kohlenwasserstoffe und/oder C₃₂₋₁₀₀-Wachse,
- mit C₈₋₃₀- Alkoholen teilveresterte C₂₋₅₄-Polycarbonsäuren wie Citronensäureoctadecylester, Glutarsäuremonooleat,
- mit C₁₂₋₂₄-Fettsäuren zumindest teilweise veresterte C₂₋₅₄-Polyole wie Sorbitan-, Glycerin-, Trimethylolpropan-, Pentaerythritmonostearat, -monooleat, -distearat, -dioleat, -monolaurat usw.

Geeignete Syntane sind zum Beispiel dem Fachmann bekannte synthetische organische Gerbstoffe (s. K. Faber, "Gerbmittel, Gerbung und Nachgerbung", Frankfurt 1984).

Geeignete Vegetabilgerbstoffe sind z.B. Kastanien-Extrakte, Mimosa usw.

Die Fettung spielt für die Hydrophobierwirkung eine wichtige Rolle. Hier sei auf die Literatur verwiesen (s. M. Hollstein "Entfetten, Fetten und Hydrophobieren bei der Lederherstellung", Frankfurt, 1988; Ullmann's Encyclopädie der technischen Chemie, Stichwort Leder).

Geeignete Neutralöle sind beispielsweise tierische und/oder pflanzliche Fette und Öle wie Klauenöl, Fischöl, Sonnenblumenöl, Rapsöl, Kokosöl, Palmkernöl, Sojaöl, vorzugsweise nicht halogenierte Fettsäureester, Ölsäuremethylester, Paraffinöl, Talg. Geeignete Hydrophobiermittel sind Silicon-Emulsionen, Perfluoralkylgruppen enthaltende Polymerdispersionen einschließlich Perfluoralkylgruppen enthaltende Polyurethane.

Die erfindungsgemäß zu verwendenden Polyasparaginsäureamide ergeben auch ohne weitere Hilfsmittel der oben genannten Kategorien einen weichen und vollen Griff. Zur Fixierung der erfindungsgemäß zu verwendenden Polyasparaginsäureamide genügt eine Verminderung des pH-Werts durch Zugabe einer Carbonsäure. Die Flottenauszehrung ist in der Regel so gut, daß eine Zugabe der Säure in das Faß auch ohne Ablassen der Flotte möglich ist. Bevorzugte pH-Werte sollten kleiner als 4,5 sein, um eine ausreichende Fixierung im Leder zu erreichen. Besonders bevorzugt ist der Bereich zwischen 3,0 und 4,5.

Statt einer Fixierung mit einer Carbonsäure kann auch durch Zugabe von polyvalenten Metallverbindungen, wie Aluminium-, Titan-, Zirkon- oder Chromsalzen oder -Carboxylaten oder -Alkoxiden in der Flotte fixiert werden. Aus ökologischen Gründen wird aber im allgemeinen darauf verzichtet.

Zur Erzielung einer ausreichenden Wirkung werden erfindungsgemäß bis zu 10 Gew.-%, vorzugsweise bis zu 7 Gew-%, an Wirksubstanz, bezogen auf Falzgewicht eingesetzt. Der pH-Wert der Flotte beträgt zu Beginn der Behandlung vorzugsweise 5 bis 7. Der pH-Wert kann gegebenenfalls durch Zusatz von Basen wie Ammoniak korrigiert werden. Die Behandlung erfolgt bei einer Temperatur zwischen 20 und 80°C, vorzugsweise zwischen 35 und 60°C. Nach der Behandlung stellt sich in der Flotte ein pH-Wert von etwa 4 bis 6 ein. Durch Zugabe einer Carbonsäure wird der pH-Wert auf 3 bis 4,5 vermindert. Bevorzugte Carbonsäure zur Ansäuerung ist Ameisensäure.

Die erfindungsgemäße Verwendung der Polyasparaginsäureamide liefert Leder mit hydrophoben Eigenschaften.

Bei höheren Anforderungen an die Hydrophobwirkung ist es möglich, eine abschließende Hydrophobierung mit Silicon-Wirkstoffen oder Fluorcarbonharzen durchzuführen. Diese Wirkstoffe sind dem Fachmann bekannt und können nach einer Laufzeit der Flotte von vorzugsweise 30 Minuten in das gleiche Faß dosiert werden. Die üblicherweise anionischen Wirkstoffe sind mit den Dispersionen der erfindungsgemäß zu verwendenden Polyasparaginsäureamide gut verträglich.

Die Prozentangaben der nachfolgenden Beispiele beziehen sich, sofern nicht anders angegeben, jeweils auf das Gewicht; Teile sind Gewichtsteile.

### Herstellungsbeispiele

### Herstellung des Wirkstoffs mit Zwischenisolierung

### Beispiel A 1

38,8 g Polysuccinimid mit einem mittleren Molekulargewicht von 3000 werden in 374 g Dimethylformamid gelöst und mit 86 g Stearylamin (0,80 mol / mol Imid) auf 100-110°C erwärmt. Der Ansatz wird bei dieser Temperatur 5 Stunden gerührt. Dann wird auf Raumtemperatur abgekühlt. Das Reaktionsgemisch wird in überschüssiges (1500 ml) Methanol eingegossen, wobei das Reaktionsprodukt feinteilig ausfällt. Das Produkt wird über eine Nutsche abgesaugt und mit Methanol gewaschen und getrocknet. Man erhält ein helles Pulver.

### Beispiel A 2

289 g Polysuccinimid mit einem mittleren Molekulargewicht von 3000 werden in 1150 g Dimethylformamid gelöst und mit 400 g Stearylamin (0,5 mol / mol Imid) auf 110°C erwärmt. Der Ansatz wird bei dieser Temperatur 6 Stunden gerührt. Dann wird auf Raumtemperatur abgekühlt. Das Reaktionsgemisch wird in überschüssiges (6000 ml) Methanol eingegossen, wobei das Reaktionsprodukt feinteilig ausfällt. Das Produkt wird über eine Nutsche abgesaugt und mit Methanol gewaschen und getrocknet. Man erhält ein helles Pulver.

### Beispiel A 3

50 g Polysuccinimid mit einem mittleren Molekulargewicht von 6000 werden in 250 g Dimethylformamid gelöst und mit 110,8 g Stearylamin (0,80 mol / mol Imid) auf 110-120°C erwärmt. Der Ansatz wird bei dieser Temperatur 5 Stunden gerührt. Dann wird auf Raumtemperatur abgekühlt. Das Reaktionsgemisch wird in überschüssiges (2200 ml) Methanol eingegossen, wobei das Reaktionsprodukt feinteilig ausfällt. Das Produkt wird über eine Nutsche abgesaugt und mit Methanol gewaschen und getrocknet. Man erhält ein helles Pulver.

### Beispiel A 4

50 g Polysuccinimid mit einem mittleren Molekulargewicht von 3000 werden in 200 g Dimethylformamid gelöst und mit 43 g Stearylamin (0,31 mol / mol Imid) auf 120°C erwärmt. Der Ansatz wird bei dieser Temperatur 6 Stunden gerührt. Dann wird auf Raumtemperatur abgekühlt. Das Reaktionsgemisch wird in überschüssiges (1000 ml) Methanol eingegossen, wobei das Reaktionsprodukt feinteilig ausfällt. Das Produkt wird über eine Nutsche abgesaugt und mit Methanol gewaschen und getrocknet. Man erhält ein helles Pulver.

### Herstellung des Wirkstoffs ohne Zwischenisolierung

### Beispiel B 1

48,5 g Polysuccinimid mit einem mittleren Molekulargewicht von 3000 werden in 40 g N-Methylpyrrolidon gelöst und mit 67,3 g Stearylamin (0,50 mol / mol Imid) auf 140°C erwärmt. Der Ansatz wird bei dieser Temperatur 6 Stunden gerührt. Das erhaltene Reaktionsgemisch wird direkt weiterverarbeitet. Bei Bedarf kann nach Abkühlen auf Raumtemperatur zerkleinert werden.

### Beispiel B 2

48,5 g Polysuccinimid mit einem mittleren Molekulargewicht von 3000 werden in 30 g Caprolactam gelöst und mit 67,3 g Stearylamin (0,50 mol / mol Imid) auf 140°C erwärmt. Der Ansatz wird bei dieser Temperatur 6 Stunden gerührt. Das erhaltene Reaktionsgemisch wird direkt weiterverarbeitet. Bei Bedarf kann nach Abkühlen auf Raumtemperatur zerkleinert werden.

### Beispiel B 3

48,5 g Polysuccinimid mit einem mittleren Molekulargewicht von 3000 werden in 40 g N-Methylpyrrolidon gelöst und mit 74,85 g Stearylamin und 9,15 g Ethanolamin (0,86 mol Amine / mol Imid) auf 135-145°C erwärmt. Der Ansatz wird bei dieser Temperatur 6 Stunden gerührt. Das erhaltene Reaktionsgemisch wird direkt weiterverarbeitet. Bei Bedarf kann nach Abkühlen auf Raumtemperatur zerkleinert werden.

### Beispiel B 4

48,5 g Polysuccinimid mit einem mittleren Molekulargewicht von 3000 werden in 40 g N-Methylpyrrolidon gelöst und mit 74,85 g Stearylamin, 6,1 g Ethanolamin und 5,1 g N,N-Dimethylaminopropylamin (0,86 mol Amine / mol Imid) auf 135-145°C erwärmt. Der Ansatz wird bei dieser Temperatur 6 Stunden gerührt. Das erhaltene Reaktionsgemisch wird direkt weiterverarbeitet. Bei Bedarf kann nach Abkühlen auf Raumtemperatur zerkleinert werden.

### Beispiel B 5

32,3 g Polysuccinimid mit einem mittleren Molekulargewicht von 3000 werden in 26,7 g N-Methylpyrrolidon gelöst und mit 44,6 g Oleylamin (0,50 mol / mol Imid) auf 140°C erwärmt. Der Ansatz wird bei dieser Temperatur 6 Stunden gerührt. Das erhaltene Reaktiongemisch wird direkt weiterverarbeitet. Bei Bedarf kann nach Abkühlen auf Raumtemperatur zerkleinert werden.

### Beispiel B 6

146 g Polysuccinimid mit einem mittleren Molekulargewicht von 3000 werden in 90 g N-Methylpyrrolidon gelöst und mit 201,7 g Stearylamin (0,50 mol / mol Imid) auf 130-155°C erwärmt. Der Ansatz wird bei dieser Temperatur 8 Stunden gerührt. Das erhaltene Reaktionsgemisch wird direkt weiterverarbeitet. Bei Bedarf kann nach Abkühlen auf Raumtemperatur zerkleinert werden.

### Herstellung der Dispersionen aus den Polyasparaginsäureamiden A1 bis A4 (ohne organisches Lösungsmittel)

### Dispersion C 1

29,0 g des Produkts aus Beispiel A 1 werden in eine auf 75°C erwärmte Lösung gegeben, die aus 3,25 g Ölsäure, 1,97 g Monoethanolamin und 307,9 g Wasser besteht. Die Dispersion wird bei 75°C 30 Minuten homogenisiert. Die Teilchengröße der dispersen Phase in der dabei erhaltenen Dispersion kann, falls sie noch nicht zufriedenstellt, durch einen Strahldispergator reduziert werden. Die Teilchengröße beträgt dann weniger als 500 nm. Die Dispersion wird auf einen Festgehalt von 10 Gew.-% eingestellt.

### Dispersion C 2

246,0 g des Produkts aus Beispiel A 2 werden in eine auf 70°C erwärmte Lösung gegeben, die aus 24,6 g Ölsäure, 10,5 g Monoethanolamin und 1124,4 g Wasser besteht. Die Dispersion wird bei 70°C 30 Minuten homogenisiert. Die dabei erhaltene Dispersion kann, falls sie noch nicht zugfriedenstellt, durch einen Strahldispergator in ihrer Teilchengröße eingestellt werden. Die Teilchengröße beträgt dann 227 nm. Die Dispersion wird auf einen Festgehalt von 20 Gew.-% eingestellt.

### Dispersion C 3

14,5 g des Produkts aus Beispiel A 3 werden in eine auf 70°C erwärmte Lösung gegeben, die aus 1,6 g Ölsäure, 0,98 g Monoethanolamin und 153,9 g Wasser besteht. Die Dispersion wird bei 70°C 30 Minuten homogenisiert. Die Teilchengröße beträgt weniger als 500 nm. Die Dispersion wird auf einen Festgehalt von 10 Gew.-% eingestellt.

### Dispersion C 4

20,0 g des Produkts aus Beispiel A 4 werden in eine auf 70°C erwärmte Lösung gegeben, die aus 7,09 g Ölsäure, 0,86 g Monoethanolamin und 91,4 g Wasser besteht. Die Dispersion wird bei 70°C 30 Minuten homogenisiert. Die Teilchengröße beträgt weniger als 400 nm. Die Dispersion wird auf einen Festgehalt von 20 Gew.-% eingestellt.

### Herstellung der Dispersionen aus den Polyasparaginsäureamiden B1 bis B6 (mit organischem Lösungsmittel)

### Dispersion D 1

50 g des Produkts aus Beispiel B 1 (entsprechend 37,17 g Wirkstoff) werden bei 110°C vorgelegt. Bei dieser Temperatur wird eine Lösung von 3,7 g Ölsäure,1,6 g Monoethanolamin in 156,9 g Wasser zugetropft. Nach Zugabe der gesamten Menge wird zunächst bei 90°C innerhalb von 30 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 20 Gew.-% eingestellt.

### Dispersion D 2

50 g des Produkts aus Beispiel B 2 (entsprechend 39,71 g Wirkstoff) werden bei 110°C vorgelegt. Bei dieser Temperatur wird eine Lösung von 3,97 g Ölsäure, 1,69 g Monoethanolamin in 172,6 g Wasser zugetropft. Nach Zugabe der gesamten Menge wird zunächst bei 70°C innerhalb von 60 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 20 Gew.-% eingestellt.

### Dispersion D 3

50 g des Produkts aus Beispiel B 3 (entsprechend 38,41 g Wirkstoff) werden bei 110°C vorgelegt. Bei dieser Temperatur wird eine Lösung von 3,7 g Ölsäure, 1,70 g Monoethanolamin in 242,7 g Wasser zugetropft. Nach Zugabe der gesamten Menge wird zunächst bei 80°C innerhalb von 240 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße <500 nm. Die Dispersion wird auf einen Festgehalt von 14,7 Gew.-% eingestellt.

### Dispersion D 4

50 g des Produkts aus Beispiel B 4 (entsprechend 38,54 g Wirkstoff) werden bei 110°C vorgelegt. Bei dieser Temperatur wird eine Lösung von 3,7 g Ölsäure, 1,70 g Monoethanolamin in 242,7 g Wasser zugetropft. Nach Zugabe der gesamten Menge wird zunächst bei 80°C innerhalb von 120 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 14,7 Gew.-% eingestellt.

### Dispersion D 5

50 g des Produkts aus Beispiel B 5 (entsprechend 37,12 g Wirkstoff) werden bei 110°C vorgelegt. Bei dieser Temperatur wird eine Lösung von 3,7 g Ölsäure, 1,6 g Monoethanolamin in 156,9 g Wasser zugetropft. Nach Zugabe der gesamten Menge wird zunächst bei 70°C innerhalb von 180 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 20 Gew.-% eingestellt.

### Dispersion D 6

50 g des Produkts aus Beispiel B 6 (entsprechend 39,71 g Wirkstoff) werden bei 110°C vorgelegt. Bei dieser Temperatur wird eine Lösung von 5,2 g Monoethanolamin in 169,3 g Wasser (ohne Ölsäure) zugetropft. Nach Zugabe der gesamten Menge wird zunächst bei 80-90°C innerhalb von 180 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße 347 nm. Die Dispersion wird auf einen Festgehalt von 20 Gew.-% eingestellt.

### Dispersion D 7

10 g des Produkts aus Beispiel B 1 (entsprechend 7,43 g Wirkstoff) werden bei 110°C vorgelegt. Bei dieser Temperatur wird eine Lösung von 0,74 g eines Emulgators, der durch Umsetzung von 1 Mol Trimethylolpropanmonostearat mit 2 Mol Bernsteinsäureanhydrid in Substanz erhalten wurde, 0,32 g Monoethanolamin in 31,4 g Wasser zugetropft. Nach Zugabe der gesamten Menge wird zunächst bei 70°C innerhalb von 180 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 20 Gew.-% eingestellt.

### Dispersion D 8

10,0 g des Produkts aus Beispiel B 1 (entsprechend 7,43 g Wirkstoff) werden bei 110°C vorgelegt. Bei dieser Temperatur wird eine Lösung von 0,74 g eines Emulgators, der durch Umsetzung von 1 Mol Glycerinmonostearat mit 2 Mol Bernsteinsäureanhydrid in Substanz erhalten wurde, 0,32 g Monoethanolamin in 31,4 g Wasser zugetropft. Nach Zugabe der gesamten Menge wird zunächst bei 70°C innerhalb von 180 Minuten homogenisiert. Die dabei erhaltene Dispersion kann, falls sie noch grobe Partikel enthält, durch einen Strahldispergator in ihrer Teilchengröße eingestellt werden. Die Emulsion hat auch ohne diese Dispergiertechnik eine Teilchengröße < 500 nm. Die Dispersion wird auf einen Festgehalt von 20 Gew.-% eingestellt.

### Anwendungsbeispiele: Lederbehandlung

Unter anderem wurden folgende Hilfsmittel eingesetzt:
® TANIGAN PAK-N: lichtechter anionischer Nachgerbstoff mit Neutralisations- und Pufferwirkung, Kondensationsprodukt aromatischer Sulfonsäuren, pH-Wert 6,6, Konzentration ca. 95 %, Produkt der Bayer AG, Leverkusen
®TANIGAN QF: synthetischer Austauschgerbstoff für die Nachbehandlung von Chromleder, pH-Wert 5,3, Säurezahl 0 bis 5, Konzentration ca. 96 %, Produkt der Bayer AG, Leverkusen
® CHROMOSAL B: basischer Chromgerbstoff mit einem Cr₂O₃-Gehalt von 26 %.

Die Dispersionen aus den Beispielen C und D wurden als Lederhilfsmittel geprüft. Die folgende Rezeptur eignet sich für Oberleder.
- Material:: chromgegerbte Rind-Wet-blue, Narbenleder, enthält 2,5 % Cr₂O₃
- Falzstärke:: 2 mm

Die folgenden %-Angaben beziehen sich auf das Falzgewicht.

Die Einsatzmengen der Hilfsmittel in der folgenden Rezeptur beziehen sich auf das Wirkstoff-Angebot.

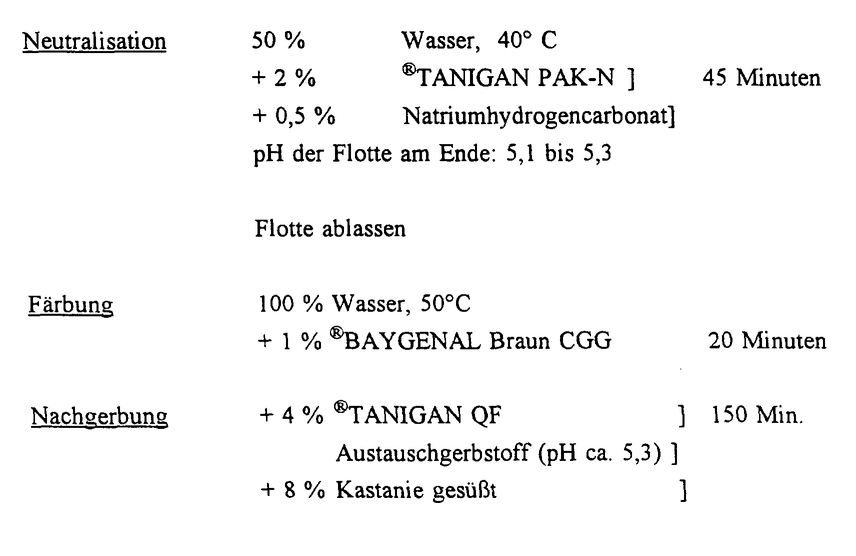

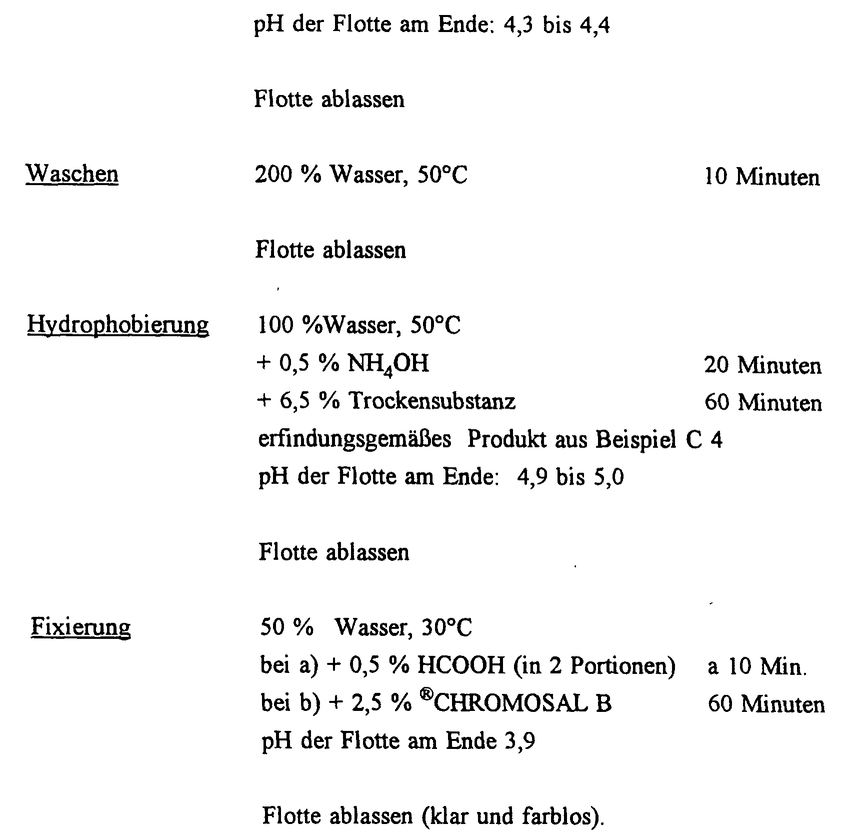

Spülen, Leder über Nacht auf Bock ablegen, abwelken. Vakuumtrocknung (10 Minuten bei 70°C), klimatisieren, stollen.

Es wurden weiche, festnarbige Leder mit angenehmem vollem Griff erhalten. Die Narbenseite war sehr glatt. Die Wasseraufnahme betrug bei dem nach oben beschriebenen Verfahren hergestellten Leder nach 24 Stunden weniger als 60 %. Im Maeser-Penetrometer werden bis zum Wasserdurchtritt mehr als 1000 Knickungen erzielt.

Weitere Anwendungsbeispiele sind in den Tabelle 1 angegeben. Dabei wurde eine vereinfachte Arbeitsweise gewählt, wobei auf die Arbeitsschrittte Färbung und Nachgerbung verzichtet wurde, um mögliche Verfärbungen zu erkennen. Zur besseren Differenzierung der Produkte gemäß den Beispielen C und D wurde nur ein Einsatz von 2,5 % Wirkstoff gewählt. Durch Einsatzmengen von 6,5 % lassen sich Wasseraufnahme-Werte unter 60 % einstellen, wie die oben beschriebene Rezeptur beispielhaft zeigt.

**Tabelle 1**

| **Eigenschaften der Leder** | | |
|---|---|---|
| Dispersion gemäß Beispiel Nr. | Griff Note* | Narbenglätte Note** |
| C 1 | 2 | 1 |
| C 2 | 1 | 1 |
| C 3 | 3 | 1 |
| C 4 | 1 | 1 |
| D 1 | 2 | 1 |
| D 2 | 2 | 1 |
| D 3 | 2 | 2 |
| D 4 | 2 | 2 |
| D 5 | 1 | 2 |
| D 6 | 2 | 1 |
| D 7 | 2 | 1 |
| D 8 | 2 | 1 |
| Vergleich (Lubritan WP⁺) | 3 | 2 |

| | | |
|---|---|---|
| * Note 1 = weich, Note 5 = hart | | |
| ** Note 1 = glatt, Note 5 = rauh | | |
| + Handelsprodukt der Firma Rohm & Haas, Prüfung ebenso gemäß der oben genannten Anwendungsvorschrift | | |

## Patentansprüche

1. Verwendung von Produkten mit einem als Zahlenmittel bestimmten Molekulargewicht von 700 bis 30 000, erhältlich durch Umsetzung von
A. Polysuccinimid mit einem als Zahlenmittel bestimmten Molekulargewicht von 500 bis 10 000, vorzugsweise 500 bis 6 000, insbesondere 1 000 mit
B. 5 bis 90 Mol-%, bezogen auf Succinimideinheiten des Polysuccinimids A, primärem und/oder sekundärem Amin, dessen Stickstoffsubstituenten 1 bis 60 Kohlenstoffatome enthalten, durch Fluoratome, Hydroxyl-, Aminogruppen und/oder Silicium-organische Reste substituiert und/oder durch Sauerstoffatome, Ester-, Amid-, Harnstoff-, Urethangruppen unterbrochen sein können, wobei mindestens 2,5 Mol-% der Stickstoffsubstituenten des Amins mindestens 12 Kohlenstoffatome enthalten, gegebenenfalls
C. (i) Derivaten von C₁-C₁₈-Monocarbonsäuren und/oder C₂-C₁₀-Dicarbonsäuren und/oder (ii) Monoisocyanaten, Diisocyanaten oder Epichlorhydrin (zur Umsetzung von Amino- und/oder Hydroxylgruppen an den Stickstoffsubstituenten des Umsetzungsprodukts aus A und B), und (obligatorisch)
D. 95 bis 10 Mol-% ringöffnende Base in Gegenwart von Wasser,
als Lederhilfsmittel.

2. Verwendung nach Anspruch 1, wonach die Produkte ein als Zahlenmittel bestimmtes Molekulargewicht von 1300 bis 16 000 besitzen.

3. Verwendung nach Anspruch 1, wonach Produkte eingesetzt werden, die durch Umsetzung von Polysuccinimid A mit 20 bis 80 Mol-% Amin B und 80 bis 20 Mol-% ringöffnende Base D erhältlich sind.

4. Verwendung nach Anspruch 1, wonach die Stickstoffsubstituenten des Amins D 1 bis 30 Kohlenstoffatome besitzen.

5. Verwendung nach Anspruch 1, wonach man das Leder mit einer wäßrigen Dispersion der zu verwendenden Produkte behandelt.

6. Verwendung nach Anspruch 5, wonach man die zu verwendenden Produkte durch Einstellen eines pH-Wertes von 3,2 bis 4,5 auf dem Leder fixiert.

7. Verwendung nach Anspruch 5, wonach man die zu verwendenden Produkte durch Zugabe von Chrom-, Aluminium-, Titan- oder Zirkonverbindungen auf dem Leder fixiert.

8. Leder, die entsprechend den Ansprüchen 1 bis 7 behandelt worden sind.

## Claims

1. Use of products which have a molecular weight, determined as the number-average, of 700 to 30,000 and are obtainable by reaction of
A. polysuccinimide having a molecular weight, determined as the number-average, of 500 to 10,000, preferably 500 to 6000, in particular 1000, with
B. 5 to 90 mol% based on the succinimide units of polysuccinimide A, of primary and/or secondary amine, the nitrogen substituents of which contain 1 to 60 carbon atoms and can be substituted by fluorine atoms, hydroxyl groups, amino groups and/or organosilicon radicals and/or interrupted by oxygen atoms, ester groups, amides groups, urea groups or urethane groups, at least 2.5 mol% of the nitrogen substituents of the amine containing at least 12 carbon atoms, if appropriate
C. (i) derivatives of C₁-C₁₈-monocarboxylic acids and/or C₂-C₁₀-dicarboxylic acids and/or (ii) monoisocyanates. diisocyanates or epichlorohydrin (for reaction of amino and/or hydroxyl groups on the nitrogen substituents of the reaction product of A and B), and (necessarily)
D. 95 to 10 mol% of ring-opening base in the presence of water.
as leather auxiliaries.

2. Use according to Claim 1, in which the products have a molecular weight, determined as the number-average, of 1300 to 16,000.

3. Use according to Claim 1, in which products which are obtainable by reaction of polysuccinimide A with 20 to 80 mol% of amine B and 80 to 20 mol% of ring-opening base D are employed.

4. Use according to Claim 1, in which the nitrogen substituents of amine D have 1 to 30 carbon atoms.

5. Use according to Claim 1, in which the leather is treated with an aqueous dispersion of the products to be used.

6. Use according to Claim 5, in which the products to be used are fixed on the leather by establishing a pH of 3.2 to 4.5.

7. Use according to Claim 5, in which the products to be used are fixed on the leather by addition of compounds of chromium, aluminium, titanium or zirconium.

8. Leathers which have been treated in accordance with Claims 1 to 7.

## Revendications

1. Utilisation de produits de poids moléculaire moyen, moyenne en nombre, 700 à 30 000, obtenus par réaction de
A. un polysuccinimide de poids moléculaire moyen, moyenne en nombre, 500 à 10 000, de préférence 500 à 6 000, plus spécialement 1 000, avec
B. 5 à 90 mol%, par rapport aux motifs de succinimide du polysuccinimide A, d'une amine primaire et/ou secondaire dont les substituants à l'azote contiennent 1 à 60 atomes de carbone, peuvent être substitués par des atomes de fluor, des groupes hydroxy, des groupes amino et/ou des radicaux organiques siliciés et/ou peuvent être interrompus par des atomes d'oxygène, des groupes ester, amide, urée, uréthane, au moins 2,5 mol% des substituants de l'amine à l'azote contenant au moins 12 atomes de carbone, le cas échéant
C. (i) des dérivés d'acides monocarboxyliques en C₁-C₁₈ et/ou d'acides dicarboxyliques en C₂-C₁₀ et/ou (ii) des mono-isocyanates, des diisocyanates ou l'épichlorhydrine (pour réaction avec les groupes amino et/ou hydroxy des substituants à l'azote du produit de réaction de A et B), et (obligatoirement)
D. 95 à 10 mol% d'une base provoquant les ouvertures de cycles, en présence d'eau,
en tant que produits auxiliaires de traitement du cuir.

2. Utilisation selon revendication 1, dans laquelle les produits ont un poids moléculaire moyen, moyenne en nombre, de 1 300 à 16 000.

3. Utilisation selon revendication 1, dans laquelle on utilise des produits obtenus par réaction du polysuccinimide A avec 20 à 80 mol% de l'amine B et 80 à 20 mol% de la base D provoquant les ouvertures de cycles.

4. Utilisation selon revendication 1, dans laquelle les substituants à l'azote de l'amine D contiennent de 1 à 30 atomes de carbone.

5. Utilisation selon revendication 1, dans laquelle on traite le cuir par une dispersion aqueuse des produits à utiliser.

6. Utilisation selon revendication 5, dans laquelle les produits à utiliser sont fixés sur le cuir par réglage à un pH de 3,2 à 4,5.

7. Utilisation selon revendication 5, dans laquelle les produits à utiliser sont fixés sur le cuir par addition de dérivés du chrome, de l'aluminium, du titane ou du zirconium.

8. Cuirs qui ont été traités selon les revendications 1 à 7.
